# EUROPÄISCHE PATENTSCHRIFT

(11) **EP 1 251 050 B1**
(45) Veröffentlichungstag und Bekanntmachung des Hinweises auf die Patenterteilung: **16.03.2005**
(21) Anmeldenummer: 02008359.8
(22) Anmeldetag: 12.04.2002
(51) Int. Cl.: B60T 10/02, B60T 5/00

(54) **Bremsanlage mit einem Retarder**
Brake system with retarder
Systéme de freinage et ralentisseur

(30) Priorität: 18.04.2001 DE 10118856
(43) Veröffentlichungstag der Anmeldung: 23.10.2002
(73) Patentinhaber: ZF FRIEDRICHSHAFEN Aktiengesellschaft, 88038 Friedrichshafen (DE)
(72) Erfinder: Ehrlinger, Friedrich J., 88048 Friedrichshafen (DE); Sauter, Frank, 88074 Meckenbeuren (DE); Michel, Rudolf, 88085 Langenargen (DE)

(56) Entgegenhaltungen:
- EP-A- 0 719 683
- WO-A-86/02608
- GB-A- 330 671

## Beschreibung

Die Erfindung betrifft eine Bremsanlage mit einem in einen Fahrzeugkühlkreislauf integrierten Retarder.

Kühlsysteme für Kraftfahrzeuge mit Verbrennungsmotoren, die mit dem Kühlmittel Wasser betrieben werden, weisen im Kühlkreislauf gewöhnlich einen Fahrzeugkühler und eine Kühlmittelpumpe auf, die von dem Verbrennungsmotor angetrieben wird und das Wasser durch die Kühlkanäle des Verbrennungsmotors und durch den Fahrzeugkühler befördert. Gleichzeitig weisen derartige Kraftfahrzeuge eine Bypass--Leitung auf, durch die das Wasser strömen kann, wenn die Wassertemperatur unter einem vorbestimmten Mindestwert liegt. Das Wasser strömt dann nicht durch den Fahrzeugkühler, wodurch es sich in einem kleineren Kreislauf schneller erwärmt. Die Wahl zwischen dem kleineren Kreislauf und dem größeren Kreislauf durch den Fahrzeugkühler erfolgt mit Hilfe eines Thermostaten, der in den Kühlkreislauf integriert ist. Dieser Thermostat hält den kleinen Kreislauf so lange offen, bis der Mindestwert der Wassertemperatur erreicht ist.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen, wie Retarder, mehr und mehr auch vom Gesetzgeber gefordert und von den Fahrzeugherstellern angeboten.

Zu den Retardern werden sowohl zusätzlich am Getriebe oder Motor angeordnete hydrodynamische, hydrostatische oder elektrodynamische Bremseinrichtungen gezählt, als auch solche Systeme, die in Form eines "Intarders" innerhalb des Getriebegehäuses vorgesehen sind.
Retarder werden des weiteren unterschieden in Primärretarder, die in Abhängigkeit von der Motordrehzahl arbeiten, und in Sekundärretarder, die in Abhängigkeit von der Fahrzeuggeschwindigkeit arbeiten.
Bei den hydrodynamischen Retardern kann als Mittel, das den Retarder durchströmt und das Wärmeenergie aufnimmt und zu einer Kühleinrichtung hin abführt, Öl oder Wasser verwendet werden. Obwohl in der überwiegenden Zahl der Anwendungsfälle Öl als Mittel verwendet wird, ist es bereits aus der GB 330671 bekannt, auch Wasser für hydrodynamische Bremseinrichtungen in schweren Kraftfahrzeugen zu verwenden.

Aus der WO 86/02608 ist es bekannt, einen hydrodynamischen Retarder direkt von der Abtriebswelle des Wechselgetriebes aus anzutreiben. Derartige Retarder werden als Sekundärretarder bezeichnet und sind unabhängig von der Drehzahl des Motors und von der Eingangswellendrehzahl des Getriebes, wie es bei einem primärseitigen Retarder der Fall ist. Dadurch wird erreicht, dass beim Schalten des Wechselgetriebes keine Zugkraftunterbrechung und keine Momentänderung auftritt. Durch eine zwischen dem Antrieb des Retarders und dem Retarder selbst angeordnete Trennkupplung ist der Retarder im normalen Fahrbetrieb abschaltbar. Dadurch werden die Verluste verringert, die auch bei einem entleerten hydrodynamischen Retarder auftreten können. Gleichzeitig bietet der Antrieb des Retarders durch eine Hochtreiberstufe die Möglichkeit, die Drehzahl der Abtriebswelle des Wechselgetriebes zu erhöhen und damit die Wirkung des Retarders zu verbessern.

Bei den bekannten Retarderkreisläufen sind die Kühlmittelpumpe und der Retarder in einer Reihenschaltung angeordnet und werden in voneinander unabhängigen Kennfeldern betrieben, d.h. die Pumpe dreht in Abhängigkeit der Motordrehzahl des Fahrzeugs und der Retarder, in der Ausführungsform eines Sekundärretarders, in Abhängigkeit der Gelenkwellendrehzahl der Getriebeabtriebswelle. Somit können beide Komponenten in bezug auf Volumenstrom und daraus resultierendem Druck nicht ideal abgestimmt werden. Im Bremsbetrieb dürfen im Fahrzeugkühlsystem keine unzulässig hohen Überdrücke oder Unterdrücke entstehen.

Aus der EP 0 719 683 ist eine Bremsanlage mit einem schaltbaren hydrodynamischen Retarder bekannt mit einem Leitungssystem, das das Arbeitsmittel des Retarders führt, das den Retarder und einen Kühler enthält und das eine Bypassleitung zur Umgehung des Retarders aufweist. Es sind Maßnahmen getroffen, um das Bremsmoment des Retarders während des Einschaltens unterhalb des vollen Wertes zu halten. Hierbei ist eine gezielte Aufteilung des Retarderstroms und des Bypassstromes notwendig, wozu aufwendige Ventile und/oder eine Vielzahl von Drosseln vorgesehen sind.

Der Erfindung liegt die Aufgabe zugrunde, die Bremsanlage zu vereinfachen.

Die Aufgabe wird gelöst durch eine Bremsanlage mit einem Retarder mit den Merkmalen des Anspruchs 1. Ausgestaltungen sind Gegenstand von Unteransprüchen.

Erfindungsgemäß wird eine Bremsanlage für ein Kraftfahrzeug vorgeschlagen mit einem hydrodynamischen Retarder und mit einem Leitungssystem, das das Kühlmittel des Antriebsmotors des Kraftfahrzeuges und gleichzeitig das Arbeitsmittel des Retarders führt. Das Leitungssystem umfasst den Retarder sowie einen Kühler mit Ausgleichsbehälter, eine Pumpe und eine Bypassleitung zur Umgehung des Retarders. In dem Leitungssystem ist in Flussrichtung des Arbeitsmittels hinter dem Retarder ein stufenlos verstellbares Regelventil angeordnet. Die Bypassleitung zweigt aus dem Leitungssystem in Flussrichtung des Arbeitsmittels zwischen dem Antriebsmotor und dem Retarder permanent ab, ohne dass an dieser Abzweigestelle ein Ventil oder Ähnliches vorgesehen wäre, und mündet in das Leitungssystem in Flussrichtung des Arbeitsmittels zwischen dem Regelventil und dem Kühler wieder ein. In einer vorteilhaften Ausgestaltung ist in dem Leitungssystem in Flussrichtung des Arbeitsmittels zwischen der Abzweigung der Bypassleitung und dem Retarder ein Abschaltventil vorgesehen. In einer weiteren vorteilhaften Ausgestaltung weist das Leitungssystem eine Verbindungsleitung zwischen dem Ausgleichsbehälter und einer Verbindungsstelle in dem Leitungssystem in Flussrichtung des Arbeitsmittels vor dem Retarder auf. In dieser Verbindungsleitung ist ein Ventil vorgesehen und in Flussrichtung des Arbeitsmittels hinter dem Retarder ist ein Rückschlagventil vorgesehen. Noch eine weitere vorteilhafte Ausgestaltung weist in dem Leitungssystem eine Verbindungsleitung zwischen dem Ausgleichsbehälter und der Mitte des Retardertorusses als der Stelle mit dem geringsten statische Druck auf. In dieser Verbindungsleitung ist ein Ventil vorgesehen und in Flussrichtung des Arbeitsmittels ist hinter dem Retarder ein Rückschlagventil vorgesehen. Eine andere Ausführungsform zeigt in dem Leitungssystem eine Verbindungsleitung zwischen dem Ausgleichsbehälter und dem Zentrum des Retarderrotors. In dieser Verbindungsleitung ist ein Ventil vorgesehen und in Flussrichtung des Arbeitsmittels ist hinter dem Retarder ein Rückschlagventil vorgesehen. Weitere vorteilhafte Ausgestaltungen zeigen das Ventil in der Verbindungsleitung als ein Rückschlagventil oder als ein schaltbares Ventil, das vorzugsweise in Abhängigkeit von der Dichte des durchströmenden Mediums automatisch schaltet und nur für Luft durchlässig ist. Vorzugsweise ist in dem Retarder eine Einrichtung zur Reduzierung der Leerlaufverluste vorgesehen. Bei einer anderen vorteilhaften Ausgestaltung ist in dem Leitungssystem eine Vakuumpumpe vorgesehen, die von einer Verbindungsstelle in Flussrichtung des Arbeitsmittels vor dem Retarder aus in die Bypassleitung fördert. Eine Ausführungsform bildet die Bypassleitung in dem Leitungssystem in Form eines Injektors aus, dessen Injektorleitung mit einer Verbindungsstelle in Flussrichtung des Arbeitsmittels vor oder hinter dem Retarder verbunden ist. Eine andere Ausgestaltung zeigt in der Bypassleitung ein Ventil auf, mit dem die Durchflussmenge einstellbar ist. Schließlich ist in einer vorteilhaften Ausführungsform der Retarder durch eine Schalteinrichtung mit einer antreibenden Welle des Kraftfahrzeuges, insbesondere einer Getriebewelle, verbindbar.

Die beschriebene Lösung weist im Vergleich zu bekannten Lösungen eine sehr kostengünstige Variante auf, da Ventile in der Bypassleitung vermieden werden können. Der Retardervolumenstrom wird ausschließlich durch die Pumpwirkung des Retarderrotors bestimmt und der Kühlvolumenstrom wird ausschließlich durch die Pumpe bestimmt. Die Druckverhältnisse im Leitungssystem des Kühlkreislaufs werden somit nicht beeinflusst, was zu einer Absicherung des Kühlkreislaufes und vor allem des Antriebsmotors des Fahrzeugs führt. Die Bremsmomentenkennlinie ist nicht vom Durchflusswiderstand des Kühlsystems abhängig.

Die Erfindung wird anhand einer Zeichnung näher beschrieben.
Es zeigen:
- Fig. 1: eine erfindungsgemässe Bremsanlage;
- Fig. 2: ergänzte Bremsanlage nach Fig. 1,
- Fig. 3: Bremsanlage mit Verbindungsleitung zum Ausgleichsbehälter und
- Fig. 4: Bremsanlage mit zusätzlichen Elementen.

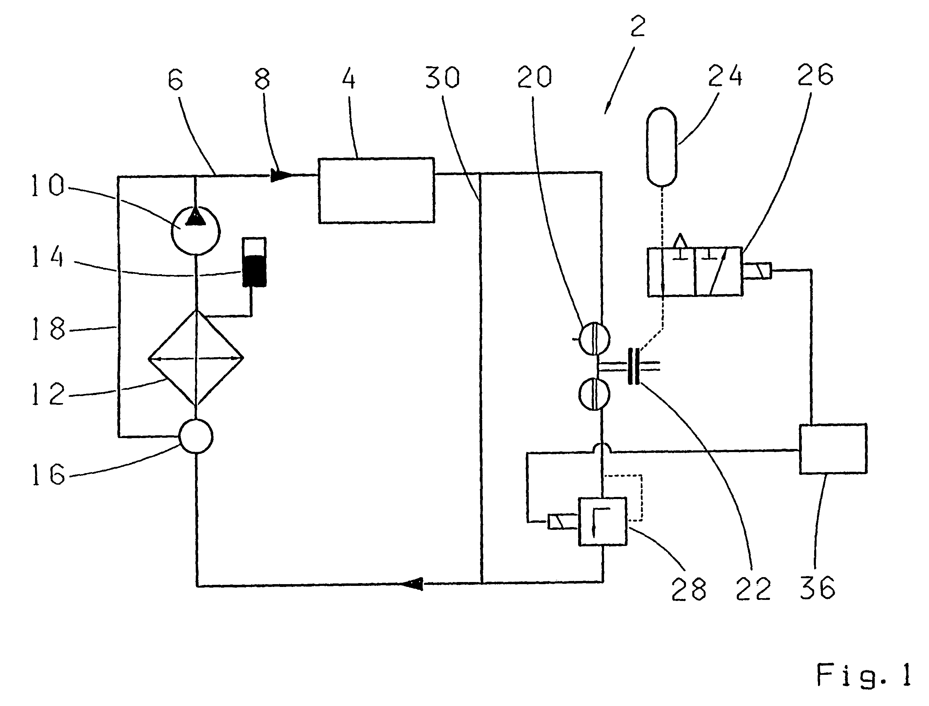

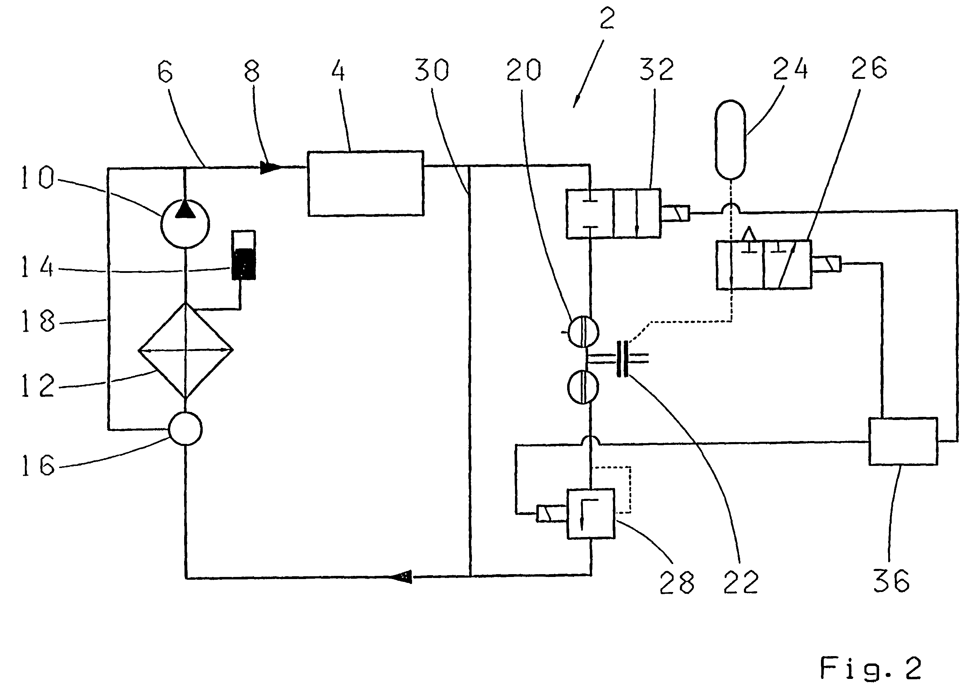

Die Fig. 1 zeigt eine Bremsanlage 2 nach der Erfindung mit einem Fahrzeugmotor 4, der in einem Leitungssystem 6 in einer durch den Richtungspfeil 8 angedeuteten Flussrichtung eines Kühlmittels für den Fahrzeugmotor hinter einer Kühlmittelpumpe 10 angeordnet ist. Ein Fahrzeugkühler 12 ist mit einem Ausgleichsbehälter 14 versehen und in dem Leitungssystem 6 zwischen der Kühlmittelpumpe 10 und einem Thermostat 16 angeordnet. Das Thermostat 16 öffnet eine Umgehungsleitung 18 für den Fahrzeugkühler 12, solange die Temperatur des Kühlmittels unterhalb eines Schwellwertes liegt. Das Leitungssystem 6 weist weiter einen hydrodynamischen Retarder 20 auf, der über eine schaltbare Kupplung 22 an eine hier nicht gezeigte Antriebswelle angeschlossen werden kann. Das Arbeitsmittel des Retarders 20 ist das gleiche Mittel, das als Kühlmittel für den Verbrennungsmotor 4 genutzt wird. Die Zuschaltung des Retarders 20 erfolgt hier mit Druckluft, die sich in einem Vorratsbehälter 24 befindet und über ein Ventil 26 der Kupplung 22 zur Schaltung zugeführt werden kann. Ein stufenlos wirkendes Retarderregelventil 28 ist in Flussrichtung des Kühlmittels in dem Leitungssystem 6 dem Retarder nachgeordnet vorgesehen. Eine Bypassleitung 30 zweigt in dem Leitungssystem 6 in Flussrichtung des Kühlmittels hinter dem Fahrzeugmotor 4 und vor dem Retarder 20 ab und überbrückt den Retarder 20 und das Retarderregelventil 28. In einer Steuerung 36 werden Schaltsignale für die Ventile 26 und 28 erzeugt. Während des Schaltvorganges der Kupplung 22 muss der Rotor des Retarders 20 auf Drehzahl gebracht werden. Zusätzlich erzeugt der Retarder ein Bremsmoment, was üblicherweise eine große und somit kostenintensive Kupplung 22 zur Folge hat. Eine Reduzierung des Bremsmomentes während des Kupplungsvorganges kann durch ein in Fig. 2 gezeigtes Abschaltventil 32 erzielt werden. Hierdurch wird der Zufluss an Arbeitsmittel zum Retarder während des Schaltvorganges verhindert. Dies führt infolge der einlassseitigen Druckabsenkung am Retarder 20 zu einem deutlich geringerem Bremsmoment. Das Abschaltventil 32 ist ebenfalls mit der Steuerung 36 verbunden.

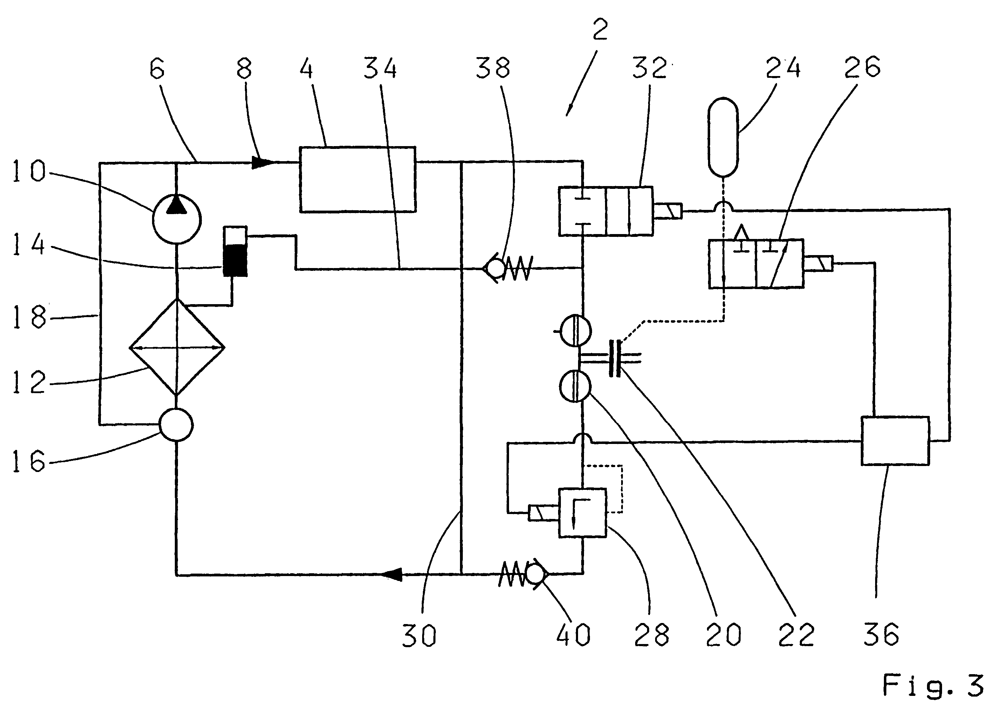

Die Fig. 3 zeigt eine zusätzliche Verbindungsleitung 34 zwischen dem Ausgleichsbehälter 14 für das Fahrzeugkühlmittel, der mit dem Fahrzeugkühler 12 in Verbindung steht, und dem Leitungssystem 6 dar, wobei die Verbindungsleitung zwischen dem Abschaltventil 32 und in Flussrichtung des Arbeitsmittels vor dem Retarder 20 in das Leitungssystem 6 führt. Die Verbindungsleitung 34 weist zudem ein Rückschlagventil 38 auf. In Flussrichtung des Arbeitsmittels ist hinter dem Retarderregelventil 28 ein weiteres Rückschlagventil 40 angeordnet. Der Retarder 20 schiebt, unterstützt durch die nachströmende und unter Vorspannung im Ausgleichsbehälter stehende Luft, das Arbeitsmittel über das sehr leicht eingestellte auslassseitige Rückschlagventil 40 weiter im Leitungssystem 6. Das Bremsmoment im Retarder 20 kann durch diese Anordnung so deutlich gesenkt werden, dass gegebenenfalls auf eine mechanische Zuschaltbarkeit des Retarders über die Schaltkupplung 22 verzichtet werden kann.

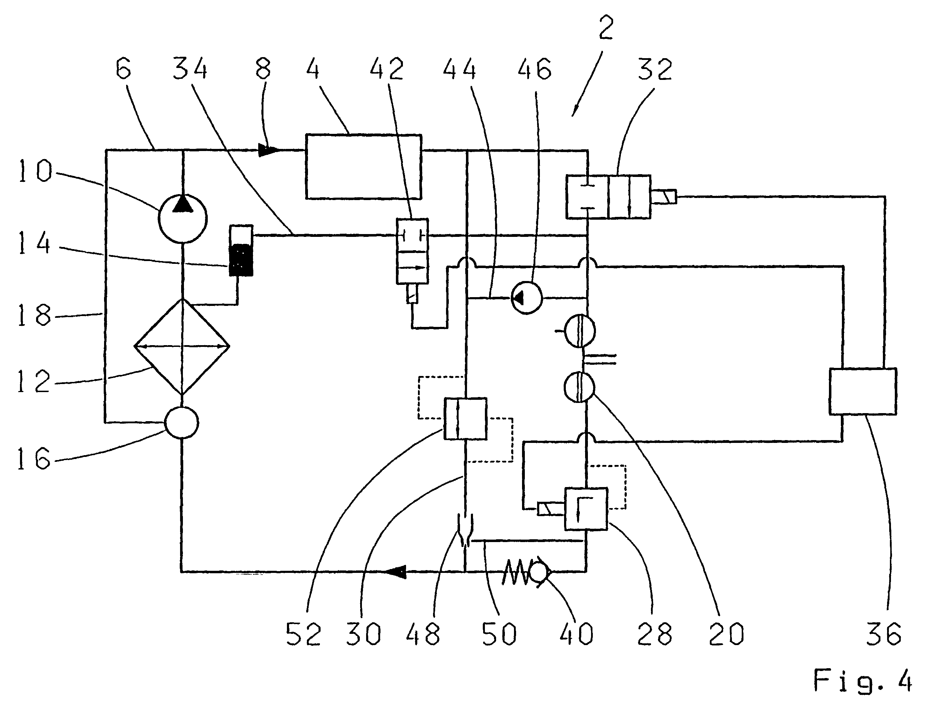

Anstelle des Rückschlagventils 38 in der Verbindungsleitung 34 kann entsprechend Fig. 4 ein Ventil 42 vorgesehen sein, das ebenfalls mit der Steuerung 36 verbunden ist und vorzugsweise in Abhängigkeit von der Dichte des durchströmenden Mediums arbeitet, was bedeutet, dass es nur für Luft durchlässig ist. In einer weiteren Verbindungsleitung 44 ist zwischen der Bypassleitung 30 und in Flussrichtung des Arbeitsmediums vor dem Retarder 20 eine Vakuumpumpe 46 vorgesehen. Die Vakuumpumpe 46 kann auch hinter dem Retarder 20 angeordnet sein. Sie sorgt für eine weitere Druckreduzierung des Arbeitsmittels am Eingang des Retarders 20. Die Bypassleitung 30 ist in Fig. 4 in Form eines Injektors 48 ausgebildet, der eine Injektorleitung 50 aufweist, die hier auslassseitig am Retarder 20 angeschlossen ist. Eine einlassseitige Anordnung am Retarder 20 ist auch möglich, aber hier nicht gezeigt. Durch den Injektor 48 wird ebenfalls ein Unterdruck erzeugt zur Bremsmomentreduzierung. Durch eine Ventil 52 ist die Durchflussmenge in der Bypassleitung 30 in beiden Richtungen einstellbar.

Im Retarder kann eine hier nicht gezeigte Leerlaufreduziereinrichtung vorgesehen sein, die beispielsweise nur bei der Zuschaltung wirkt, also eine kleiner dimensionierte Auslegung der Schaltkupplung 22 erlaubt. Im Nichtbremsbetrieb sorgt die Leerlaufreduziereinrichtung für geringe Ventilationsverluste bzw. Leerlaufverluste und ermöglicht im Bremsbetrieb das Einstellen auch sehr geringer Bremsmomente.

### Bezugszeichen

- 2: Bremsanlage
- 4: Fahrzeugmotor
- 6: Leitungssystem
- 8: Richtungspfeil
- 10: Kühlmittelpumpe
- 12: Fahrzeugkühler
- 14: Ausgleichsbehälter
- 16: Thermostat
- 18: Umgehungsleitung
- 20: Retarder
- 22: Kupplung
- 24: Vorratsbehälter
- 26: Ventil
- 28: Retarderregelventil
- 30: Bypassleitung
- 32: Abschaltventil
- 34: Verbindungsleitung
- 36: Steuerung
- 38: Rückschlagventil
- 40: Rückschlagventil
- 42: Ventil
- 44: Verbindungsleitung
- 46: Vakuumpumpe
- 48: Injektor
- 50: Injektorleitung
- 52: Ventil

## Patentansprüche

1. Bremsanlage (2) für ein Kraftfahrzeug mit einem hydrodynamischen Retarder (20) und mit einem Leitungssystem (6), das das Kühlmittel des Antriebsmotors (4) des Kraftfahrzeuges und gleichzeitig das Arbeitsmittel des Retarders (20) führt, und das den Retarder (20) sowie einen Kühler (12) mit Ausgleichsbehälter (14), eine Pumpe (10) und eine Bypassleitung (30) zur Umgehung des Retarders (20) umfasst, **dadurch gekennzeichnet, dass** in dem Leitungssystem (6) in Flussrichtung des Arbeitsmittels hinter dem Retarder (20) ein stufenlos verstellbares Retarderregelventil (28) angeordnet ist und die Bypassleitung (30) aus dem Leitungssystem (6) in Flussrichtung des Arbeitsmittels zwischen dem Antriebsmotor (4) und dem Retarder (20) permanent abzweigt und in das Leitungssystem (6) in Flussrichtung des Arbeitsmittels zwischen dem Retarderegelventil (28) und dem Kühler (12) einmündet.

2. Bremsanlage (2) nach Anspruch 1, **dadurch gekennzeichnet, dass** in dem Leitungssystem (6) in Flussrichtung des Arbeitsmittels zwischen der Abzweigung der Bypassleitung (30) und dem Retarder (20) ein Abschaltventil (32) vorgesehen ist.

3. Bremsanlage (2) nach Anspruch 1 oder 2, **dadurch gekennzeichnet, dass** das Leitungssystem (6) eine Verbindungsleitung (34) zwischen dem Ausgleichsbehälter (14) und einer Verbindungsstelle in dem Leitungssystem (6) in Flussrichtung des Arbeitsmittels vor dem Retarder (20) aufweist und dass in dieser Verbindungsleitung (34) ein Ventil (38, 42) und in Flussrichtung des Arbeitsmittels hinter dem Retarder (20) ein Rückschlagventil (40) vorgesehen ist.

4. Bremsanlage (2) nach Anspruch 1 oder 2, **dadurch gekennzeichnet, dass** das Leitungssystem (6) eine Verbindungsleitung (34) zwischen dem Ausgleichsbehälter (14) und der Mitte des Torusses des Retarders (20) als der Stelle mit dem geringsten statische Druck aufweist und dass in dieser Verbindungsleitung (34) ein Ventil (38, 42) und in Flussrichtung des Arbeitsmittels hinter dem Retarder ein Rückschlagventil (40) vorgesehen ist.

5. Bremsanlage (2) nach Anspruch 1 oder 2, **dadurch gekennzeichnet, dass** das Leitungssystem (6) eine Verbindungsleitung (34) zwischen dem Ausgleichsbehälter (14) und dem Zentrum des Rotors des Retarders (20) aufweist und dass in dieser Verbindungsleitung (34) ein Ventil (38, 42) und in Flussrichtung des Arbeitsmittels hinter dem Retarder (20) ein Rückschlagventil (40) vorgesehen ist.

6. Bremsanlage (2) nach einem der Ansprüche 3 bis 5, **dadurch gekennzeichnet, dass** das Ventil in der Verbindungsleitung (34) ein Rückschlagventil (38) ist.

7. Bremsanlage (2) nach einem der Ansprüche 3 bis 5, **dadurch gekennzeichnet, dass** das Ventil in der Verbindungsleitung (34) ein schaltbares Ventil (42) ist.

8. Bremsanlage (2) nach Anspruch 7, **dadurch gekennzeichnet, dass** das schaltbare Ventil (42) dichteabhängig automatisch schaltet und nur für Luft durchlässig ist.

9. Bremsanlage (2) nach einem der Ansprüche 1 bis 8, **dadurch gekennzeichnet, dass** in dem Leitungssystem (6) eine Vakuumpumpe (46) vorgesehen ist, die von einer Verbindungsstelle in Flussrichtung des Arbeitsmittels vor oder hinter dem Retarder (20) aus in die Bypassleitung (30) fördert.

10. Bremsanlage (2) nach einem der Ansprüche 1 bis 9, **dadurch gekennzeichnet, dass** die Bypassleitung (30) in dem Leitungssystem (6) in Form eines Injektors (48) ausgebildet ist, dessen Injektorleitung (50) mit einer Verbindungsstelle in Flussrichtung des Arbeitsmittels vor oder hinter dem Retarder (20) verbunden ist.

11. Bremsanlage (2) nach einem der Ansprüche 1 bis 10, **dadurch gekennzeichnet, dass** in der Bypassleitung (30) ein Ventil (52) vorgesehen ist, mit dem die Durchflussmenge durch die Bypassleitung (30) einstellbar ist.

12. Bremsanlage (2) nach einem der Ansprüche 1 bis 11, **dadurch gekennzeichnet, dass** der Retarder (20) durch eine Schalteinrichtung (22) mit einer antreibenden Welle des Kraftfahrzeuges, insbesondere einer Getriebewelle, verbindbar ist.

13. Bremsanlage (2) nach einem der Ansprüche 1 bis 12, **dadurch gekennzeichnet, dass** in dem Retarder (20) eine Einrichtung zur Reduzierung der Leerlaufverluste vorgesehen ist.

14. Bremsanlage (2) nach Anspruch 13, **dadurch gekennzeichnet, dass** die Zuschaltung der Einrichtung bei der Betätigung der Schalteinrichtung (22) erfolgt.

## Claims

1. Brake system (2) for an automotive vehicle with a hydrodynamic retarder (20) and with a system of lines (6) which supply coolant to the driving engine (4) of the automotive vehicle and at the same time the operating medium to the retarder (20) and which comprises the retarder (20) as well as a cooler (12) with expansion tank (14), a pump (10) and a bypass line (30) for bypassing the retarder (20), **characterized by** the fact that a continuously adjustable retarder control valve (28) is fitted in the system of lines (6) in the direction in which the operating medium flows downstream of the retarder (20) and in that the bypass line (30) permanently branches out from the system of lines (6) in the direction in which the operating medium flows between the driving engine (4) and the retarder (20) and runs into the system of lines (6) in the direction in which the operating medium flows between the retarder control valve (28) and the cooler (12).

2. Brake system (2) according to claim 1, **characterized in that** a shutoff valve (32) is fitted in the system of lines (6) in the direction in which the operating medium flows between the branch of the bypass line (30) and the retarder (20).

3. Brake system (2) according to claim 1 or 2, **characterized in that** the system of lines (6) features a connecting line (34) between the expansion tank (14) and a connection point in the system of lines (6) in the direction in which the operating medium flows upstream of the retarder (20) and **in that** a valve (38, 42) is fitted in this connecting line (34) and **in that** a nonreturn valve (40) is fitted in the direction in which the operating medium flows downstream of the retarder (20).

4. Brake system (2) according to claim 1 or 2, **characterized in that** the system of lines (6) features a connecting line (34) between the expansion tank (14) and the center of the torus of the retarder (20) as the point of the lowest static pressure and **in that** a valve (38, 42) is fitted in this connecting line (34) and **in that** a nonreturn valve (40) is fitted in the direction in which the operating medium flows downstream of the retarder (20).

5. Brake system (2) according to claim 1 or 2, **characterized in that** the system of lines (6) features a connecting line (34) between the compensation tank (14) and the center of the rotor of the retarder (20) and **in that** a valve (38, 42) is fitted in this connecting line (34) and **in that** a nonreturn valve (40) is fitted in the direction in which the operating medium flows downstream of the retarder (20).

6. Brake system (2) according to one of claims 3 to 5, **characterized in that** the valve in the connecting line (34) is a nonreturn valve (38).

7. Brake system (2) according to one of claims 3 to 5, **characterized in that** the valve in the connecting line (34) is a switchable valve (42).

8. Brake system (2) according to claim 7, **characterized in that** the switchable valve (42) automatically shifts depending on density and can only be penetrated by air.

9. Brake system (2) according to one of claims 1 to 8, **characterized in that** a vacuum pump (46) is fitted in the system of lines (6) which pumps medium from a connection point in the direction in which the operating medium flows upstream or downstream of the retarder (20) into the bypass line (30).

10. Brake system (2) according to one of claims 1 to 9, **characterized in that** the bypass line (30) in the system of lines (6) has the form of an injector (48) whose injector line (50) is connected to a connection point in the direction in which the operating medium flows upstream or downstream of the retarder (20).

11. Brake system (2) according to one of claims 1 to 10, **characterized in that** a valve (52) with which the rate of flow through the bypass line (30) can be adjusted is fitted in the bypass line (30).

12. Brake system (2) according to one of claims 1 to 11, **characterized in that** by means of a shifting device (22) the retarder (20) can be connected to a driving shaft of the automotive vehicle, especially to a transmission shaft.

13. Brake system (2) according to one of claims 1 to 12, **characterized in that** a device reducing idling loss is fitted in the retarder (20).

14. Brake system (2) according to claim 13, **characterized in that** the device is activated when the shifting device (22) is actuated.

## Revendications

1. Installation de freinage (2) pour un véhicule automobile ayant un ralentisseur hydrodynamique (20) et un système de conduites (6) qui convoie l'agent réfrigérant du moteur d'entraînement (4) du véhicule et en même temps l'agent de travail du ralentisseur (20) et qui comprend le ralentisseur (20) ainsi qu'un radiateur (12) doté d'un réservoir de compensation (14), une pompe (10) et une conduite by-pass (30) pour contourner le ralentisseur (20), **caractérisée en ce qu**'une vanne de régulation du ralentisseur réglable en continu est disposée en aval du ralentisseur dans le système de conduites (6) dans le sens d'écoulement de l'agent de travail et que la conduite by-pass (30) dérive en permanence du système de conduites (6) dans le sens d'écoulement de l'agent de travail entre le moteur d'entraînement (4) et le ralentisseur (20) et débouche dans le système de conduites (6) dans le sens d'écoulement de l'agent de travail entre la vanne de régulation du ralentisseur (28) et le radiateur (12).

2. Installation de freinage (2) selon la revendication 1, **caractérisée en ce qu'**une soupape de coupure (32) est prévue dans le système de conduites (6) dans le sens d'écoulement de l'agent de travail entre la dérivation de la conduite by-pass (30) et le ralentisseur (20).

3. Installation de freinage (2) selon la revendication 1 ou 2, **caractérisée en ce que** le système de conduites (6) présente une conduite de raccordement (34) entre le réservoir de compensation (14) et un point de jonction dans le système de conduites (6) dans le sens d'écoulement de l'agent de travail en amont du ralentisseur (20) et **en ce que**, dans cette conduite de raccordement (34) est prévue une vanne (38, 42) et dans le sens d'écoulement de l'agent de travail en aval du ralentisseur (20) est prévu un clapet anti-retour.

4. Installation de freinage (2) selon la revendication 1 ou 2, **caractérisée en ce que** le système de conduites (6) présente une conduite de raccordement (34) entre le réservoir de compensation (14) et le centre du tore du ralentisseur (20) en tant que point ayant la pression statique la plus faible et qu'une vanne (38, 42) est prévue dans cette conduite de raccordement (34) ainsi qu'un clapet anti-retour (40) en aval du ralentisseur dans le sens d'écoulement de l'agent de travail.

5. Installation de freinage (2) selon la revendication 1 ou 2, **caractérisée en ce que** le système de conduites (6) présente une conduite de raccordement (34) entre le réservoir de compensation (14) et le centre du rotor du ralentisseur (20) et **en ce qu'**une vanne (38, 42) est prévue dans cette conduite de raccordement (34) ainsi qu'un clapet anti-retour (40) an aval du ralentisseur (20) dans le sens d'écoulement de l'agent de travail.

6. Installation de freinage (2) selon l'une des revendications 3 à 5, **caractérisée en ce que** la vanne qui se trouve dans la conduite de raccordement (34) est un clapet anti-retour (38).

7. Installation de freinage (2) selon l'une des revendications 3 à 5, **caracté**r**isée en ce que** la vanne qui se trouve dans la conduite de raccordement (24) est une vanne commutable (42).

8. Installation de freinage (2) selon la revendication 7, **caractér**i**sée en ce que** la vanne commutable (42) commute automatiquement en fonction de l'étanchéité et n'est permise que pour l'air.

9. Installation de freinage (2) selon l'une des revendications 1 à 8, **caractérisée en ce qu**'une pompe à vide (46) est prévue dans le système de conduites (6) laquelle, à partir d'un point de jonction dans le sens de l'écoulement de l'agent de travail en amont ou en aval du ralentisseur (20), refoule dans la conduite by-pass (30).

10. Installation de freinage (2) selon l'une des revendications 1 à 9, **caractérisée en ce que** la conduite by-pass (30) dans le système de conduites (6) est constituée sous forme d'un injecteur (48) dont la conduite d'injection (50) est reliée à un point de jonction dans le sens d'écoulement de l'agent de travail en amont ou en aval du ralentisseur (20).

11. Installation de freinage (2) selon l'une des revendications 1 à 10, **caractérisée en ce qu**'une vanne (52) est prévue dans la conduite by-pass (30), laquelle permet de régler le débit dans la conduite by-pass (30).

12. Installation de freinage (2) selon l'une des revendications 1 à 11, **caractérisée en ce que** le ralentisseur (20) peut être relié à un arbre de commande du véhicule, en particulier un arbre de boîte de vitesses, par un dispositif de commande (22).

13. Installation de freinage (2) selon l'une des revendications 1 à 12, **caractérisée en ce qu**'un dispositif de réduction des pertes au ralenti est prévu dans le ralentisseur (20).

14. Installation de freinage (2) selon la revendication 13, **caractérisée en ce que** la mise en circuit du dispositif est réalisée lors de l'actionnement du dispositif de commande (22).
